# EUROPEAN PATENT APPLICATION

(11) **EP 3 493 082 A1**
(43) Date of publication of application: **05.06.2019**
(21) Application number: 17460071.8
(22) Date of filing: 29.11.2017
(51) Int. Cl.: G06F 17/30, G06Q 10/04

(54) **A METHOD OF EXPLORING DATABASES OF TIME-STAMPED DATA IN ORDER TO DISCOVER DEPENDENCIES BETWEEN THE DATA AND PREDICT FUTURE TRENDS**

(71) Applicant: Oke Poland Spolka z o.o., 80-890 Gdansk (PL)
(72) Inventor: Pytlasinski, Artur Grzegorz, 83-000 Pruszcz Gdanski (PL)
(74) Representative: Czub, Krzysztof

(57) **Abstract**

A method of exploring databases of time-stamped data in order to discover dependencies between the data and predict future trends, **characterized in that** internet data ("soft data") collected from the source (websites, social networking sites, blogs, web forums as well as words or phrases put in web search engines) and statistical data ("hard data") available in different forms (lists, tables, reports) are transformed (converted) into normalized time series, and then associated (linked) with the predicted time series, using a locality-sensitive hashing algorithm based on projection of the series onto the basis of normalized gaussian random walks of the same length; the keyword-based ("soft") data are transformed into time series by measuring the relative frequency of occurrence in the source text, weighted by the relevance of the keyword; the N-bits long LSH hashes are encoded into a text string consisting of N trigrams and stored into an indexed field of a relational database or search engine; the selected best series (predictors), found by searching the database for the most similar trigram-encoded hashes, are then used as inputs for the multiple regression algorithm to generate a forecast series for a specified number of time intervals in the future; during the process of training, the irrelevant input series are filtered-out from the initial input set; as a result, the remaining inputs are the relevant predictors of the target time series, revealing the hidden dependencies between seemingly unrelated data, while the root-mean-square error from the training process indicates uncertainty of the obtained results.

## Description

The presented invention concerns database analyses in general. The invention is related to a method of exploring databases of time-stamped data in order to discover dependencies between the data and predict future trends.
The data processing system processes information concerning transactions (operations) in databases in order to anticipate the future demand using data regression techniques. During the analysis, specific indicators of user interest are to be created. The results will signal how the course will look in the future. The project is based on the assumption that the activity of Internet users reflects future phenomena. The aggregation and sorting of searches by the keywords will allow to predict future events, such as the preferences of real estate buyers or the volume of demand for the specified car brand or model.
This is aimed at obtaining information on the progress of trends from the frequency values of historic patterns. Owing to trend extrapolation, it is possible to calculate the anticipated value of pattern frequency. Using regression techniques (such as mid-square approximation), one can collect information about the progress of a trend and make its projection in order to forecast the future frequency of a pattern that may be used to calculate the expected value of the recommendation principle.
Up to date there is no automated method for predicting events. For this purpose experts, when analyzing data on the issue and correlated issues, guess about future behaviors or phenomena. However, man cannot analyze the amount of data as a calculating machine in a short time, so it is based only on residual information that may not be a representative sample of the population. In addition, the conclusions drawn by the analyst are subjective and the results of his reflections are not measurable. The innovation is not only about creating an unused prediction algorithm, but also by replacing the process of analyzing and drawing the conclusions of experts in different areas of the algorithm to make these processes better, more accurately, objectively and in a very short time.
The invention can be used for a variety of purposes. It will be used wherever anticipation of phenomena in the economy is necessary. List of potential industries where it can replace or support the normal analytical process of a human being is i.a.: food, medical, financial, tourist, automotive, construction, IT, household appliances, mobile phones, health and beauty, home and garden, children's articles, fashion, real estate etc.

The capacities of modern computers in the area of collecting, registering, and analysing gigantic volumes of data have created the database analysis area described as data exploration. It is used to discover association relationships in the database by determining patterns that often occur in a database. Such associations or principles can be used to gather useful information from large databases in different fields, including selective marketing, market analysis, and executive applications (such as target marketing, customer relationship management, market basket analysis, cross-selling, market segmentation), risk analysis and management applications (such as forecasting, customer retention, insurance, quality control, competitive analysis), fraud detection and in other applications (such as text exploration (groups of messages, e-mails, documents), exploring stream data, network exploration, DNA data analyses, etc.).

The presented invention concerns a method of exploring databases of time-stamped data in order to discover dependencies between the data and predict future trends. Internet data ("soft data") collected from the source (websites, social networking sites, blogs, web forums as well as words or phrases put in web search engines) and statistical data ("hard data") available in different forms (lists, tables, reports) are transformed (converted) into normalized time series, and then associated (linked) with the predicted time series, using a locality-sensitive hashing algorithm based on projection of the series onto the basis of normalized gaussian random walks of the same length. The keyword-based ("soft") data are transformed into time series by measuring the relative frequency of occurrence in the source text, weighted by the relevance of the keyword. To speed-up the process of searching for the most similar time series (i.e. having the highest absolute value of the Pearson correlation coefficient, if appropriately smoothed and time-shifted), the N-bits long LSH hashes are encoded into a text string consisting of N trigrams and stored into an indexed field of a relational database or search engine. Thanks to this approach, a set of potentially best input series (predictors) can be quickly found by searching the database for the most similar trigram-encoded hashes. The selected series are then used as inputs for the multiple regression algorithm to generate a forecast series for a specified number of time intervals in the future. During the process of training, the irrelevant input series are filtered-out from the initial input set. As a result, the remaining inputs are the relevant predictors of the target time series, revealing the hidden dependencies between seemingly unrelated data, while the root-mean-square error from the training process indicates uncertainty of the obtained results. A mechanism for monitoring of prediction and efficacy (quality) of the index is advantageously used. Multithreading mechanism allowing scaling of calculations performed on many machines, including those operating in a swarm system is advantageously used. In order to find correlations between the processed statistic data from the past and the current data from the Internet tools such as decision trees, neural networks, fractal models, genetic algorithms with elements of synthetic intelligence (SI) are used.

Advanced algorithms can undergo multilevel modifications to suit the users's/recipient's preferences. Mechanism of synthetic intelligence (SI) capable of self-learning can provide self-improvement and self-development of the basic functions. This means that the mechanism will have a development potential allowing for adaptation to changes occurring in the environment as well as the user's preferences.
Anticipating macroeconomic developments will allow to better prepare for change and mitigation of cyclical effects. Predictions of future events affects, to a large extent, the decision-making process with a certain degree of risk. The ability to predict the course of events can contribute to the revolutionary methodology of crisis management and risk management in the understanding of long-term strategic planning. The mechanism may also apply to individual users wishing to predict the potential consequences of causal phenomena. Implementing the presented invention in advanced prediction models, using synthetic intelligence (SI), can result in optimization of decision processes as well as enhancing the effectiveness of risk management. Most importantly, the processes of developing correlations between information stored in powerful data volumes must take place in real time.
Practical utility of the developed solution is to obtain information on the trend of a given phenomenon. Information is one of the most important elements of competitive advantage of companies. It allows you to make better decisions and avoid many mistakes. The importance of the importance of information in operational and strategic management determines the key technology solution resulting from R & D works. The utility of the solution is not limited to economic operators but also includes the decision-making process in households.
The tool for trending and thus forecasting can be applied in many areas of human activity, either in business or in other fields. In business activity having more information on customer preferences would also allow to better personalize and profile of advertising content. The enhanced mechanism can be used as a sales forecasting tool giving a rationalization of production plans, including raw material requirements, monitoring of multiple complex manufacturing processes, including reports on possible abnormalities.

The effective method and device for database exploration has been described in order to process popular patterns from transactional databases by calculating a trend of every pattern frequency in time. The algorithm concerns the consistent internal sequence of steps that lead to the desired result, where a 'step' means the manipulation of physical quantities that may have the form of electric or magnetic signals, although this requirement is not necessary. Such signals may be recorded, transmitted, combined, compared or be the object of other changes. Such signals are commonly referred to as bits, values, elements, symbols, characters, terms, numbers, etc.

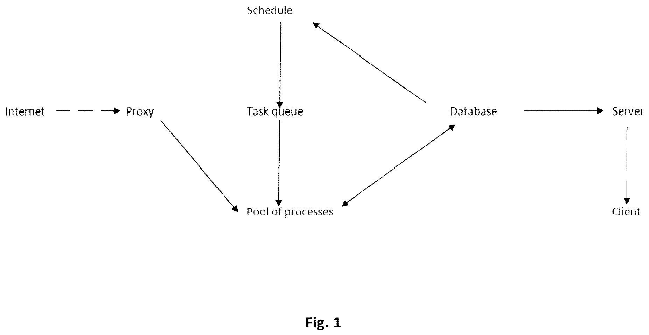

Figure 1 presents an example of a system used to explore the principles from a transactional database.
   Figure 1 presents a block diagram that is an example of the exploration system of association principles based on the attributes and according to common patterns identified in the transaction database. In Figure 1, the system comprises the data processing engine or a system coupled with the database. The system encompasses an output device as well, where minimum one condition of the explored association principles is introduced by a user. For example, the input device is used to introduce conditions (e.g. support, confidentiality, elevation, etc.) for the association principle that is to be the subject of exploration. An output device may be a local display or printer or a remotely connected computer system, such as a computer device of a client or an online PC. In the selected example, the system (e.g. a private WAN or Internet) covers the central server system and one or more network customers or server systems that are connected to the network as an input device and/or an output device. The communication between the central server system and the computer systems in the network takes place typically via the network, e.g. a connected public telephony network via the asynchronous digital subscriber lines (ADSL) or broadband buses.

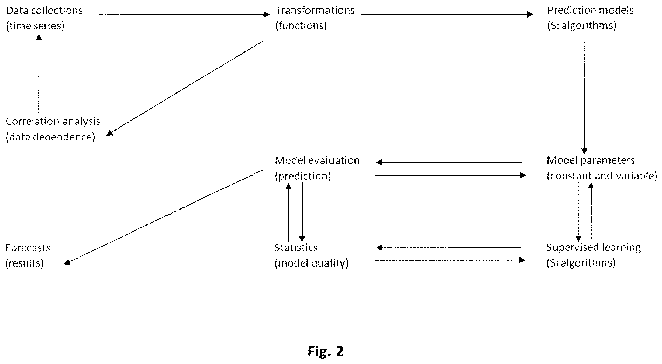

Figure 2 shows the schema that illustrates the process of using data regression and pattern exploration in order to forecast future demand.

The software for the input data (on the issue interesting for the user/client) returns the pointer with
a prediction error. The results given by the algorithm are expressed in the same scale as the historical data from which the calculations were taken. For example, to predict sales volume, the algorithm searches the Internet for historical sales value and the data that is correlated with that. In other example, If historical sales figures were in USD, the expected value would also be in USD. On the other hand, the expected GDP growth rate or unemployment rate will be given in [%]. For example, the corruption rate in a given country will be given in the scale [1-10]. If the probability of occurrence of an event is calculated, the algorithm will obtain historical data when the same event occurred in the past and under what circumstances, and the result will be given in [%].

Having a data set of data for several countries, in particular stock prices, currency exchange rates and economic indicators as the hard data, and economy-related reports, messages and articles available on the internet as the soft data, it can be transformed into a set of normalized (standardized) time series by calculating their standard score, preceded by calculating relative keyword frequency in case of soft data. For a single selected series from this set, a forecast can be computed based on the predictors of the selected series. The potential predictors (input series) can be selected from the entire data set by searching for series which are the most correlated (yet non-identical) to the selected (target, predicted) series, repeatedly shifted by an increasing time offset and smoothed with increasing time window (moving average). To speed-up the searching process, the data series are pre-processed by computing 64-bit LSH hashes and using them as described in the first claim. Thus selected potential inputs, along the target series, are fed into a set of linear regression models, each for one of the consecutive points in time from the future (eg. 7 models in case of a daily forecast for the next 7 days). The model inputs are additionally multiplied by producing variously smoothed and time-shifted versions of each input. The regression algorithm used can be Ridge or Lasso, for instance. With the models ready, the cross-validated training process can be started. After the training, the inputs having very low weights are considered irrelevant and therefore can be removed from the inputs. The remaining inputs with the highest weights are the most important predictors of the target time series. The predicted values from the model are assembled into a single time series and denormalized to produce the final forecast.

## Claims

1. A method of exploring databases of time-stamped data in order to discover dependencies between the data and predict future trends, where internet data ("soft data") are collected from the source (websites, social networking sites, blogs, web forums as well as words or phrases put in web search engines) and statistical data ("hard data") available in different forms (lists, tables, reports) are collected and stored, **characterized in that** the both data are transformed (converted) into normalized time series, and then associated (linked) with the predicted time series, using a locality-sensitive hashing algorithm based on projection of the series onto the basis of normalized gaussian random walks of the same length; the keyword-based ("soft") data are transformed into time series by measuring the relative frequency of occurrence in the source text, weighted by the relevance of the keyword; the N-bits long LSH hashes are encoded into a text string consisting of N trigrams and stored into an indexed field of a relational database or search engine; the selected best series (predictors), found by searching the database for the most similar trigram-encoded hashes, are then used as inputs for the multiple regression algorithm to generate a forecast series for a specified number of time intervals in the future; during the process of training, the irrelevant input series are filtered-out from the initial input set; as a result, the remaining inputs are the relevant predictors of the target time series, revealing the hidden dependencies between seemingly unrelated data, while the root-mean-square error from the training process indicates uncertainty of the obtained results.

2. A method according to the claim 1, **characterized in that** a mechanism for monitoring of prediction and efficacy (quality) of the index is used.

3. A method according to the claim 1, **characterized in that** multithreading mechanism allowing scaling of calculations performed on many machines, including those operating in a swarm system is used.
